# EUROPÄISCHE PATENTSCHRIFT

(11) **EP 2 561 259 B1**
(45) Veröffentlichungstag und Bekanntmachung des Hinweises auf die Patenterteilung: **11.06.2014**
(21) Anmeldenummer: 11715427.8
(22) Anmeldetag: 12.04.2011
(51) Int. Cl.: F16K 37/00, F16K 1/20

(54) **ABSPERRARMATUR**
SHUT-OFF VALVE
SOUPAPE D'ARRÊT

(30) Priorität: 23.04.2010 DE 102010018024
(43) Veröffentlichungstag der Anmeldung: 27.02.2013
(73) Patentinhaber: Metso Automation MAPAG GmbH, 86497 Horgau (DE)
(72) Erfinder: PAUER, Andreas, 86179 Augsburg (DE)
(74) Vertreter: Geirhos, Johann
(86) Internationale Anmeldenummer: PCT/EP2011/001829
(87) Internationale Veröffentlichungsnummer: WO 2011/131309

(56) Entgegenhaltungen:
- EP-A2- 1 024 267
- JP-A- 2000 110 963
- US-B1- 6 396 260

## Beschreibung

Die Erfindung betrifft eine Absperrarmatur mit einem Gehäuse, einem in dem Gehäuse angeordneten Ventilsitz und einer den Ventilsitz ansteuernden Absperrklappe, die im Gehäuse mittels einer Antriebswelle drehbar gelagert ist, insbesondere mindestens doppelt-exzentrisch gelagert ist, wobei im Bereich des Ventilsitzes eine Dichteinrichtung, insbesondere eine metallische Dichteinrichtung, ausgebildet ist, wobei zur Erfassung eines Schließpunktes der Absperrarmatur eine Sensoreinrichtung vorgesehen ist.

Eine Absperrarmatur, die eine doppelt-exzentrische gelagerte Absperrklappe aufweist, die mit einer Antriebswelle zu der Betätigung der Absperrklappe zwischen einer Offnungsstellung und einer Sperrstellung drehfest verbunden ist, und bei der der Ventilsitz von einer metallischen Dichteinrichtung in Form eines gehäuseseitigen Metallringes und eines oder mehrerer ringförmiger metallischer Dichtelemente an der Absperrklappe gebildet ist, ist aus der EP 1 207 325 B1 bekannt.

Derartige Absperrarmaturen werden bei cryogenen Temperaturen im Bereich von bis zu - 270° C oder hohen Temperaturen im Bereich von bis zu 400° C eingesetzt, um Rohrleitungen in einer Sperrstellung der Absperrarmatur abzusperren. Insbesondere werden gattungsgemäße Absperrarmaturen in Ethylenanlagen zur Absperrung von Spaltgas eingesetzt. Da Spaltgas Verunreinigungen, insbesondere Koks, enthält, kann bei derartigen Anwendungen durch die metallische und starre Dichteinrichtung im Bereich des Ventilsitzes eine hohe Lebensdauer und eine hohe Dichtigkeit erzielt werden.

Bei derartigen Anwendungen und Einsätzen ist aus Sicherheitsgründen eine hohe Dichtigkeit in der Sperrstellung der Absperrarmatur erforderlich, so dass für den Betrieb der Absperraramatur die Erfassung der Schließstellung und somit des Schließpunktes, bei der sich die Absperrklappe in der Sperrstellung befindet, von entscheidender Bedeutung ist. Insbesondere bei einer exzentrisch oder mehrfach-exzentrisch gelagerten Absperrklappe ist der Schließpunkt von hoher Wichtigkeit, da die Absperrarmatur bereits bei kleinen Abweichungen und kleinen Öffnungswinkeln ausgehend von dem Schließpunkt eine Leckage aufweist. Bei gattungsgemäßen Absperrarmaturen mit einer metallischen und somit starren Dichteinrichtung wird dieser Effekt noch verstärkt.

Zur Erfassung der Schließstellung und somit des Schließpunktes der Absperrklappe können Näherungsschalter verwendet werden, die beispielsweise mit der Antriebswelle der Absperrklappe in Wirkverbindung stehen. Derartige Näherungsschalter weisen jedoch eine hohe Schalthystere auf, so dass mit Näherungsschalter bei gattungsgemäßen Absperrarmaturen, die mit metallischen und somit starren Dichteinrichtungen versehen sind und die aufgrund der Bauweise mit einer mehrfachexzentrisch gelagerten Absperrklappe bereits bei kleinen Öffnungswinkeln eine Leckage aufweisen, der Schließpunkt der Absperrklappe nicht exakt ermittelt und überwacht werden kann.

Bei gattungsgemäßen Absperrarmaturen ist in der Regel an der Antriebswelle ein Antrieb, beispielsweise ein manueller Kurbeltrieb, ein Elektromotor oder ein Pneumatikantrieb, befestigt, der über ein Getriebe mit der Antriebswelle der Absperrklappe in Wirkverbindung steht. Es besteht daher die Möglichkeit, über ein Positionssystem mit einem entsprechenden Sensor an dem Antrieb die Drehwinkelstellung der Antriebswelle und somit bestimme Positionsstellungen der Absperrklappe zu erfassen. Das Positionssystem an dem Antrieb beinhalten jedoch das Getriebe- und Passungsspiel auf die Antriebswelle der Absperrklappe, so dass mit einem Positionssystem an dem Antrieb bei einer gattungsgemäßen Absperrarmatur, die mit metallischen und somit starren Dichteinrichtungen versehen sind und die aufgrund der Bauweise mit einer mehrfachexzentrisch gelagerten Absperrklappe bereits bei kleinen Öffnungswinkeln eine Leckage aufweisen, der Schließpunkt der Absperrklappe nicht exakt ermittelt und überwacht werden kann.

Die angeführten Sensorerfassungssysteme mit Näherungsschaltern an der Antriebswelle der Absperrklappe bzw. Positionssystemen an dem Antrieb der Absperrklappe sind somit durch ihren konstruktiven Aufbau nicht in der Lage, den exakten Schließpunkt der Absperraramatur bei einer gattungsgemäßen Absperrarmatur, die mit einer metallischen und somit starren Dichteinrichtung versehen ist und die aufgrund der Bauweise mit einer mehrfachexzentrisch gelagerten Absperrklappe bereits bei kleinen Öffnungswinkeln eine Leckage aufweist, reproduzierbar anzufahren bzw. zu überprüfen.

Die US 6 396 260 B1 offenbart einen berührungslosen Drehwinkelsensor mit Permanentmagnet an einem Drosselventil. Der Permanentmagnet ist an einer mit der Antriebswelle des Drosselventils mitdrehenden Scheibe angeordnet. Mit einem am Gehäuse angeordneten Hall-Sensor wird die sich mit dem Drehwinkel der Antriebswelle und somit des Permanentmagneten sich verändernde magnetische Induktion erfasst, um den Drehwinkel des Drosselventils zu messen.

Die EP 1 024 267 A1 offenbart eine Drosselklappeneinheit mit einem Hall-Effekt-Drehwinkelsensor.

Aus der JP 2000 110953 A ist ein Ventil mit einer Anzeigenadel für die Anzeige der Ventilstellung beschrieben, die über ein Getriebe von der Eingangswelle angetrieben ist.

Der vorliegenden Erfindung liegt die Aufgabe zugrunde, eine Absperraramatur der eingangs genannten Gattung zur Verfügung zu stellen, bei der der Schließpunkt der Absperrklappe und somit die Sperrstellung der Absperrarmatur exakt ermittelt werden kann.

Diese Aufgabe wird erfindungsgemäß dadurch gelöst, dass die Sensoreinrichtung von einem Wegmesssensor gebildet ist, der mittels eines an der Antriebswelle der Absperraramatur angeordneten Betäügungsmittels betätigbar ist, wobei mit dem Wegmesssensor an der mit der Absperrklappe drehfest verbundenen Antriebswelle eine Wegmessung durchgeführt wird. Der erfindungsgemäße Gedanke besteht somit darin, einen von der Antriebswelle über ein βetätigungsmittel betätigten Wegmesssensors vorzusehen, mit dem an der mit der Absperrkfappe drehfest verbundenen Antriebswelle eine Wegmessung durchgeführt wird, um eine Aussage über die tatsächliche Schließstellung und somit den Schließpunkt der Absperrklappe zu erhalten. Durch die Betätigung des Wegmesssensors über das Betätigungsmittel von der Antriebswelle, die direkt mit der Absperrklappe verbunden ist, ist die Wegmessung mittels des Wegmesssensors unabhängig von dem Getriebe- und Passungsspiel zwischen dem Antrieb und der Antriebswelle, wie dies bei einem Positionssystem an dem Antrieb der Fall ist, bzw. weist die erfindungsgemäße Wegmessung an der Antriebswelle durch Verwendung eines Wegmesssensors gegenüber der Verwendung von Näherungsschaltern keine Schalthysterese auf, so dass der Schfießpunict der Absperrklappe exakt erfasst werden kann. Mit der erfindungsgemäßen Wegmessung an der Antriebswelle der Absperrklappe wird somit ermöglicht, bei Absperrarmaturen mit großen Exzentern oder Mehrfachexzentern und mit einer metallischen, starren Dichteinrichtung den Schließpunkt der Absperrarmatur sicher und exakt zu erfassen. Mit der erfindungsgemäßen Schließpunktmessung durch den Wegmesssensor kann somit der Schließpunkt der Absperrklappe sicher und exakt erfasst werden, wobei weiterhin eine hohe Reproduzierbarkeit gegeben ist und ermöglicht wird, durch einen entsprechenden Antrieb den Schließpunkt der Absperrarmatur exakt anzufahren.

Gemäß einer bevorzugten Ausführungsform der Erfindung ist das Betätigungsmittel derart an der Antriebswelle befestigt, dass eine Schließbewegung der Antriebswelle in einem Erfassungsbereich, insbesondere einem Erfassungsbereich von 0° bis 5° , vor Erreichen des Schließpunktes mittels des Wegmesssensors erfassbar ist. Die Wegmessung erfolgt somit in den letzten Winkelgraden der Absperrklappenstellung vor Erreichen des Schließpunktes, der der 0° -Stellung der Absperrarmatur entspricht. Mit einer derartigen Wegmessung auf den letzten Winkelgraden vor Erreichen der Schließstellung der Absperrklappe kann über das Betätigungsmittel der Erfassungsbereich als Drehwinkel der Antriebswelle auf den gesamten Messbereich des Wegmesssensors aufgelöst werden, so dass eine exakte Messung und Erfassung des Schließpunktes und somit der Schließstellung der Absperrklappe ermöglicht wird.

Besondere Vorteile ergeben sich, wenn der Wegmesssensor eine verschiebbare Tastspitze aufweist, die in dem Erfassungsbereich mittels des Betätigungsmittels betätigbar ist. Ein derartiger Wegmesssensor mit einer längsverschiebbaren Tastspitze bildet einen Messtaster, wobei auf einfache Weise der Erfassungsbereich des Drehwinkels der Antriebswelle auf den Messbereich des Messtasters übertragen werden kann.

Bevorzugt ist der Wegmesssensor als induktiver Wegtaster ausgebildet. Bei derartigen induktiven Wegtastern wird die Tastspitze während der Wegmessung in dem Erfassungsbereich mittels einer Feder in Anlage an das Betätigungsmittel gehalten. Der Wegtaster besteht aus einem mit der Tastspitze in Wirkverbindung stehenden Tauchanker, der axial zwischen zwei Spulen bewegbar ist, wobei sich bei einer Betätigung des Wegtasters die magnetische Induktion der Spulen ändert.

Hinsichtlich eines einfachen Aufbaus ergeben sich Vorteile, wenn der Wegmesssensor an einem Gehäuse, insbesondere einem die Antriebswelle umgebenden Gehäuse, der Absperrarmatur befestigt ist. Das Gehäuse, an dem der Wegmesssensor befestigt ist, kann hierbei von einer die Antriebswelle umgebenden Laterne gebildet werden, die mit einem Flansch zur Befestigung eines Antriebs versehen ist. Hierdurch ist eine einfache Befestigung des Wegmesssensors erzielbar, wobei weiterhin eine geschützte Anordnung des Wegmesssensors innerhalb der Laterne erzielt werden kann.

Hinsichtlich eines einfachen Aufbaus ergeben sich Vorteile, wenn das Betätigungsmittels mittels eines Klemmringes an der Antriebswelle befestigt ist. Mit einem Klemmring kann das Betätigungsmittels auf einfache Weise an der Antriebswelle der Absperrklappe befestigt werden, wobei weiterhin eine einfache Nachrüstbarkeit des Wegmesssensors ermöglicht wird.

Sofern gemäß einer bevorzugten Weiterbildung der Erfindung der Klemmring mittels einer Verdrehsicherung an der Antriebswelle befestigt ist, kann eine sichere und gegen unbeabsichtigte Verdrehung gesicherte Befestigung des Betätigungsmittels an der Antriebswelle erzielt werden. Nach einer Justage und Kalibrierung des Wegmesssensors kann somit eine hohe Reproduzierbarkeit der Schließpunktmessung erzielt werden.

Gemäß einer bevorzugten Ausführungsform der Erfindung ist das Betätigungsmittel von einer an der Antriebswelle radial angeordneten Schaltfahne gebildet. Mit einer derartigen radialen Schaltfahne, die an dem Klemmring einstückig angeformt oder befestigt werden kann, kann ein als Messtaster mit einer axial verschiebbaren Tastspitze ausgebildeter Wegmesssensor auf einfache Weise in dem Erfassungsbereich des Drehwinkels der Antriebswelle betätigt werden. Durch entsprechende radiale Erstreckung der Schaltfahne kann hierbei auf einfache Weise ein radialer Hebelarm zur Betätigung der Tastspitze des Wegtasters erzielt werden, der es ermöglicht, in dem Erfassungsbereich des Drehwinkels der Antriebswelle den gesamten Messbereich des Wegmesssensors auszunutzen und in dem Erfassungsbereich eine hohe Auflösung des Drehwinkels der Antriebswelle und somit der Positionsmessung der Absperrklappe zu erzielen. Da der Messbereich des Wegtasters in eine bestimmte Anzahl von Inkrementen unterteilt ist, beispielsweise 200 Inkremente, kann durch entsprechende Bemessung der Schaltfahne mit einem entsprechenden radialen Hebelarm eine hohe Auflösung des Drehwinkels von beispielsweise 0,02°C innerhalb des Erfassungsbereichs mit einer derartigen radialen Schaltfahne erzielt werden. Sofern bei einer gattungsgemäßen Absperrarmatur ein Drehwinkel von +/- 0,1°C ausgehend von der Schließstellung der Absperraramatur vorgegeben ist, bei dem am Schließpunkt der Absperrklappe eine leckagefreie Dichtigkeit der Absperrklappe gegeben ist, kann mit einer derartigen Auflösung des Drehwinkels der Schließpunkt sicher und exakt erfasst werden.

Besondere Vorteile sind erzielbar, wenn die Schaltfahne mittels eines Einstellmittels an dem Klemmring befestigt ist. Nach einer Vorjustage und Vorkalibrierung kann über das Einstellmittel eine exakte Justage und Kalibrierung der Schließpunkmessung auf den Schließpunkt der Absperrklappe auf einfache Wese erzielt werden.

Sofern in dem Gehäuse, in dem der Wegmesssensor angeordnet ist, eine Kontrollöffnung ausgebildet ist, die in dem Erfassungsbereich einen Zugang zu dem Wegmesssensor und dem Betätigungsmittel und/oder dem Einstellmittel ermöglicht, kann die Justage und Kalibrierung des Schließpunktes auf einfache Weise durchgeführt werden. Bevorzugt ist die Kontrollöffnung abdeckbar, beispielsweise durch einen entsprechenden Deckel, so dass bei abgedeckter Kontrollöffnung eine vor Beschädigungen geschützte Anordnung des Betätigungsmittels und des Wegmesssensors innerhalb des Gehäuses erzielt wird.

Der Wegmesssensor ist hierbei bevorzugt tangential an dem Gehäuse angeordnet. Mit einer derartigen Anordnung des als Messtasters ausgebildeten Wegmesssensors kann bei einer Betätigung durch eine radiale Schaltfahne das Auftreten von Seitenkräfte auf die Tastspitze während der Betätigung vermieden werden, so dass eine exakte Erfassung des Schließpunktes und eine hohe Lebensdauer des Messtasters erzielt wird.

Anstelle einer Schaltfahne als Betätigungsmittel sind alternative Lösungsansätze denkbar. Möglich ist beispielsweise als Betätigungsmittel für den Wegmesssensor einen an der Antriebswelle angeordneten oder angeklemmten Exzenternocken vorzusehen. Der Exzenternocken kann hierbei an dem Klemmring befestigt oder einstückig angeformt werden. Mit einem derartigen Exzenternocken kann ebenfalls in dem Erfassungsbereich der Messbereich eines Wegmesssensors, beispielsweise eines Näherungsschalters, hoch aufgelöst werden, um eine exakte Erfassung des Schließpunktes und eine hohe Reproduzierbarkeit der Schließpunktmessung zu erzielen.

Der Wegmesssensor ist bei einem derartigen als Exzenternocke ausgebildeten Betätigungsmittel bevorzugt radial an dem Gehäuse angeordnet.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße Absperrarmatur in einem Längsschnitt,
- Figur 2: eine Draufsicht auf die Absperrarmatur,
- Figur 3: einen Ausschnitt der Figur 2 in einer vergrößerten Darstellung und
- Figur 4: einen Schnitt entlang der Linie A-A der Figur 3.

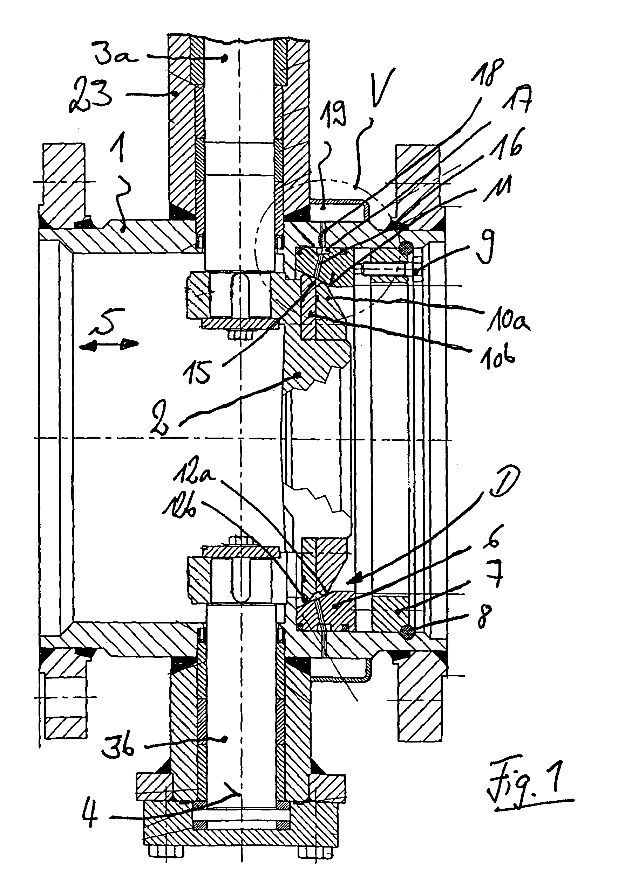

In der Figur 1 ist eine erfindungsgemäße Absperrarmatur in einem Längsschnitt gezeigt. Die Absperrarmatur weist ein Gehäuse 1 auf, in dem eine Absperrklappe 2 bevorzugt doppel-exzentrisch drehbar gelagert ist. In der Figur 1 ist die Absperrklappe 2 in der Schließstellung gezeigt, in der ein Ventilsitz V angesteuert ist. Die Absperrklappe 2 ist mittels einer geteilten Antriebswelle 3a, 3b um eine Drehachse 4 drehbar gelagert und mit den Antriebswellen 3a, 3b drehfest verbunden. Die obere Antriebswelle 3a steht auf nicht mehr dargestellte Weise mit einem Antrieb in Verbindung. Die untere Abtriebswelle 3b bildet einen Lagerzapfen. In geöffneter Stellung ist die Absperrarmatur in Durchflussrichtung 5 von Medium, beispielsweise Spaltgas, durchströmbar.

Der Ventilsitz V ist zwischen einem gehäuseseitigen, als Ventilsitzbauteil ausgebildeten Dichtring 6 und der Absperrklappe 2 ausgebildet. Der Dichtring 6 ist über einen Befestigungsring 7, eine Halteeinrichtung 8 und mehrere Befestigungsschrauben 9 an dem Gehäuse 1 axial einstellbar angeordnet und mit dem Gehäuse 1 verspannbar.

Im Bereich des Ventilsitzes V ist eine Dichteinrichtung D angeordnet, die von einem oder zwei in Durchströmungsrichtung 5 axial beabstandeten Dichtelementen 10a, 10b gebildet ist. Der Dichtring 6 ist mit einer kegelförmigen, sich nach Innen verjüngenden Dichtfläche 11 versehen. Im vorliegenden Ausführungsbeispiel sind die beispielsweise als Metallringe oder Metalllippen ausgebildeten beiden Dichtelemente 10a, 10b an der Absperrklappe 2 angeordnet. Es ist jedoch ebenfalls möglich, die Dichtelemente an dem Dichtring 6 anzuordnen und die Absperrklappe 2 mit einer entsprechenden kegelförmigen Dichtfläche zu versehen. Jedes Dichtelement 10a, 10b ist im Bereich der Dichtfläche 11 mit einer Dichtfläche 12a, 12b versehen, die einen kreisförmigen Querschnitt aufweisen.

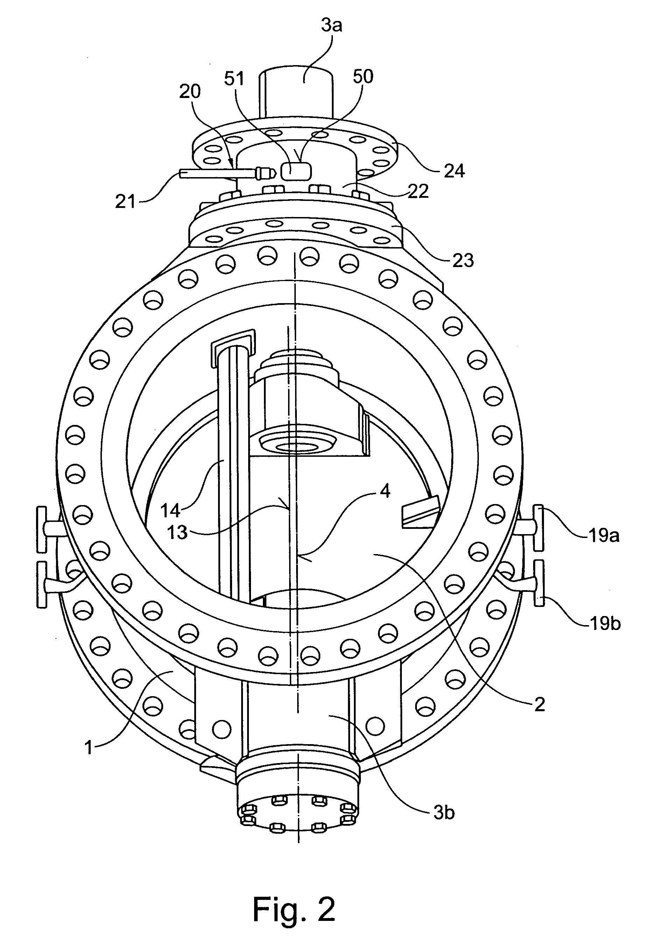

Zwischen den Dichtelementen 10a, 10b und dem Dichtring 6 ist bei geschlossener Absperrklappe ein Ringraum 15 ausgebildet, der eine Block- und Bleedeinrichtung bildet und über mindestens eine in dem Dichtring 6 ausgebildete Verbindungsbohrung 16 mit einem zwischen dem Gehäuse 1 und dem Dichtring 6 ausgebildeten, umlaufenden Verteilungsringkanal 17 in Verbindung steht. Die Verteilungsringkanal 17 steht über mindestens eine im Gehäuse 1 ausgebildete Verbindungsbohrung 18 mit einem Anschlussraum 19 in Verbindung, der mit in der Figur 2 näher dargestellten Anschlüssen 19a, 19b in Verbindung steht, die über eine nicht mehr dargestellte Versorgungsleitung mit einer Sperrmediumversorgung verbunden sind, um den Ringraum 15 in der Schließstellung der Absperrklappe 2 mit einem Sperrmedium, beispielsweise Wasserdampf oder Stickstoff, zu beaufschlagen. Die Verbindungsbohrung 16, der Verteilungsringkanal 17, die Verbindungsbohrung 18, der Anschlussraum 19 und die Anschlüssen 19a, 19b sowie die Versorgungsleitung zu der der Sperrmediumversorgung bilden hierbei die Sperrmediumzuführung für den Ringraum 15.

Die Absperrklappe 2 ist von der Drehachse 4 - wie in der Figur 1 ersichtlich ist - in axialer Richtung der Absperrarmatur beabstandet, wodurch eine erste Exzentrizität gebildet ist. In der Figur 2 ist die Absperrarmatur in einer Draufsicht dargestellt, wobei ersichtlich ist, dass die Drehachse 4 und eine Mittelachse 13 der Absperrarmatur einen seitlichen Abstand aufweisen, wodurch eine zweite Exzentrizität gebildet ist.

Um in der geöffneten Stellung der Absperrklappe 2 eine direkte Anströmung der von den Metallringen oder Metalllippen ausgebildeten Dichtelemente 10a, 10b zu verhindern, ist - wie aus der Figur 2 ersichtlich ist - eine Schutzeinrichtung 14 im Gehäuse 1 angeordnet. Die Schutzeinrichtung 14 ist als Blech ausgebildet, das in Strömungsrichtung einen beispielsweise V-förmigen Querschnitt aufweist. Hierdurch kann in der geöffneten Stellung der Absperrklappe 2 die Ablagerung von Verunreinigungen an den Dichtelementen 10a, 10b wirksam verringert und vermieden werden.

Erfindungsgemäß ist die Absperrarmatur 1 mit einer Sensoreinrichtung 20 versehen, mit der der in der Figur 1 dargestellte Schließpunkt, bei der sich die Absperrklappe 2 in der Schließstellung befindet, und eine Rohrleitung, in der die Absperrarmatur angeordnet ist, leckagefrei absperrt, erfasst werden kann.

Die Sensoreinrichtung 20 ist hierzu-als Wegmesssensor 21 ausgebildet, der im Bereich der oberen Antriebswelle 3a angeordnet und an einem Gehäuse 22 befestigt ist. Das Gehäuse 22 ist hierbei als rohrförmige Laterne ausgebildet, die an einem an dem Gehäuse 1 befestigten Lagerflansch 23, in dem die obere Antriebswelle 3a drehbar gelagert ist, befestigt ist und die Antriebswelle 3a umgibt. Das Gehäuse 22 ist zur Befestigung eines nicht näher dargestellten Antriebs, der zum Antrieb der oberen Antriebswelle 3a und somit zum Antrieb der Absperrklappe 2 dient, mit einem entsprechenden Befestigungsflansch 24 versehen.

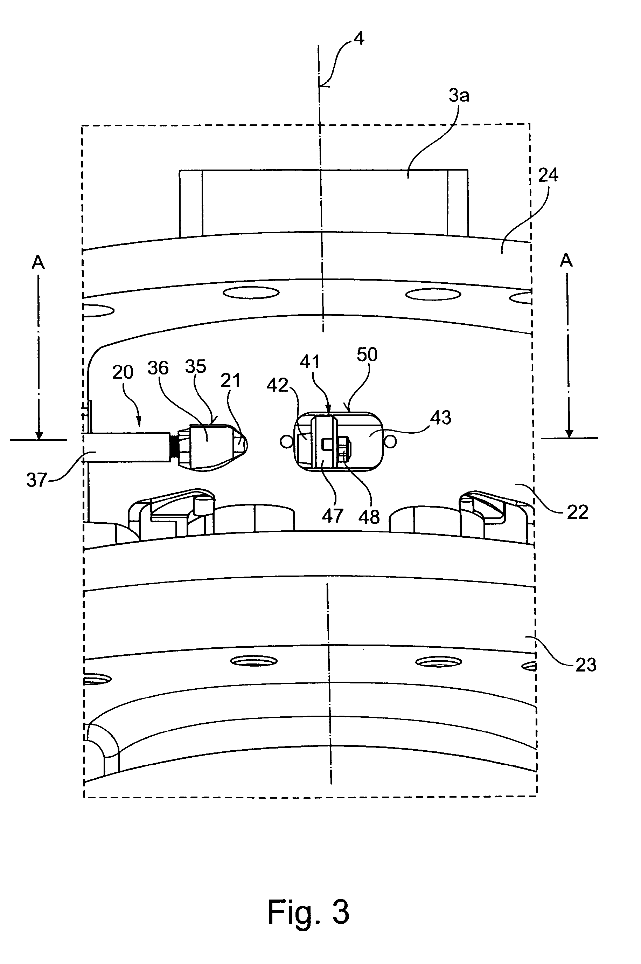

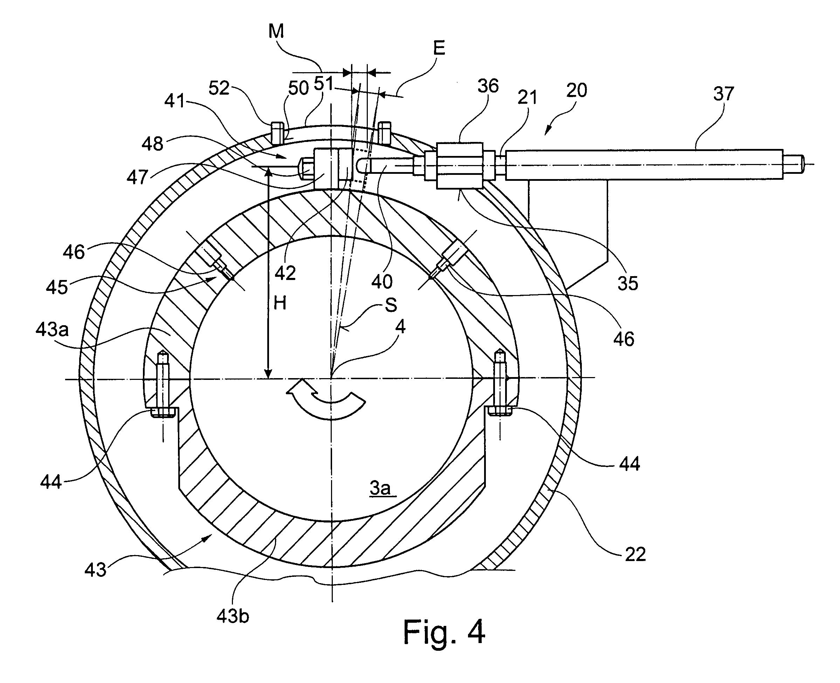

In den Figuren 3 und 4 ist der Aufbau der Sensoreinrichtung 20 näher dargestellt. Die als Wegmesssensor 21 ausgebildete Sensoreinrichtung 20 ist tangential zu der Antriebswelle 3a an dem Gehäuse 22 befestigt und erstreckt sich durch eine Öffnung 35 in dem Gehäuse 22 zu der innerhalb des Gehäuses 22 angeordneten Antriebswelle 3a. In der Öffnung 35 ist eine Befestigungshülse 36 befestigt, in der der Wegmesssensor 21 mittels einer geeigneten Befestigungsvorrichtung, die in dem vorliegenden Ausführungsbeispiel von zwei Schraubenmuttern an den Stirnseiten der Befestigungshülse 36 gebildet ist und die auf ein Sensorgehäuse des Wegmesssensors 21 aufgeschraubt werden können, befestigt werden kann. An dem Gehäuse 22 ist weiterhin ein Schutzrohr 37 befestigt, in dem die Sensoreinrichtung 20 vor Beschädigungen geschützt angeordnet werden kann.

Die als Wegmesssensor 21 ausgebildete Sensoreinrichtung 20 ist bevorzugt von einem induktiven Wegtaster gebildet, der eine axial verschiebbare, bevorzugt federbelastete Tastspitze 40 aufweist. Der Wegmesssensor 21 ist zur Betätigung mit einem an der oberen Antriebswelle 3a angeordneten Betätigungsmittel 41 betätigbar.

Das Betätigungsmittel 41 ist von einer radial zu der Antriebswelle 3a angeordneten Schaltfahne 42 gebildet, die mittels eines Klemmringes 43 an der Antriebswelle 3a befestigt ist. Der Klemmring 43 besteht hierzu aus zwei Klemmringhälften 43a, 43b, die mittels entsprechender Klemmschrauben 44 an der Antriebswelle 3 verklemmt werden kann. Weiterhin ist für den Klemmring 43 eine Verdrehsicherung 45 vorgesehen, die von einer oder mehreren radial in dem Klemmring 43 angeordneten Madenschrauben 46 gebildet werden können, die mit der Antriebswelle 3a in Verbindung bringbar sind.

Zur Befestigung des als Schaltfahne 42 ausgebildeten Betätigungsmittels 41 an dem Klemmring 43 ist der Klemmring 43 mit einer radialen Erweiterung 47 versehen, an der die Schaltfahne 42 befestigt oder einstückig ausgebildet werden kann. Im dargestellten Ausführungbeispiel ist die Schaltfahne 42 mittels eines beispielsweise von einer Einstellschraube gebildeten Einstellmittels 48 an der Erweiterung 47 einstellbar befestigt.

Mit der erfindungsgemäßen Sensoreinrichtung kann ein Erfassungsbereich E von bevorzugt 5° Drehwinkel der Antriebswelle 3a vor Erreichen der Schließstellung S der Absperrklappe 2 und somit des Schließpunktes der Absperrklappe 2 erfasst werden, die als 0°-Stellung definiert ist. In der Figur 4 ist weiterhin der Messbereich M des als Wegtasters ausgebildeten Wegmesssensors 21 verdeutlicht.

In der Figur 4 ist mit durchgezogenen Linien das Betätigungsmittel 41 und die Tastspitze 40 zu Beginn des Erfassungsbereichs E dargestellt. Mit strichpunktierten Linien ist das Betätigungsmittel 41 in einer Stellung am Ende des Erfassungsbereichs E und somit am Schließpunkt S der Absperrklappe 2 dargstellt.

Wird die Absperrklappe 2 von einer Öffnungsstellung in die Schließstellung betätigt - wie dies in der Figur 4 durch den Pfeil verdeutlicht ist - , gelangt die Antriebswelle 3a kurz vor Erreichen der Schließstellung S in den Erfassungsbereich E, in dem über die als Schaltfahne 42 ausgebildete Betätigungsmittel 41 die Tastspitze 40 des Wegmesssensors 21 in dem Messbereich M betätigt wird und somit von dem Wegmesssensor 21 der Drehwinkel der Antriebswelle 3a und somit die Schließbewegung und Position der Absperrklappe 2 gemessen werden kann.

Durch entsprechende geometrische Auslegung des radialen Hebelarms H der Schaltfahne 42 kann hierbei in dem Messbereich M eine hohe Auflösung des Drehwinkels der Antriebswelle 3a und somit der Stellung der Absperrklappe 2 von beispielsweise 0,02° in dem Erfassungsbereich E erzielt werden. Sofern die Absperrklappe 2 bei einer Abweichung von +/-0,1⁰ von dem Schließpunkt S als in der Schließstellung befindliche Absperrklappe 2 angesehen werden kann, kann somit mit dem erfindungsgemäßen Wegmesssensor 21 die Schließstellung S der Absperrklappe 2 sicher und exakt sowie reproduzierbar erfasst werden.

In den Figuren 3 und 4 ist weiterhin ersichtlich, dass eine Kontrollöffnung 50 in dem Gehäuse 22 ausgebildet ist, die in dem Erfassungsbereich E eine Sicht und einen Zugriff auf die Tastspitze 40 und das Betätigungsmittel 41 ermöglicht. Hierdurch kann eine Justage und eine Kalibrierung der erfindungsgemäßen Schließpunktmessung auf den Schließpunkt S in einfacher Weise durchgeführt werden. Zum Verschließen und Abdecken der Kontrollöffnung 50 ist eine Abdeckung 51 vorgesehen, die beispielsweise mittels entsprechender Schrauben 52 an dem Gehäuse 22 befestigt werden kann.

Mit der erfindungsgemäßen, als Wegmesssensor 21 ausgebildeten Sensoreinrichtung 20, die von dem an der Antriebswelle 3a angeordneten Betätigungselement 41 betätigt wird, werden eine Reihe von Vorteilen erzielt. Durch die erzielbare hohe Auflösung der Absperrklappenstellung in dem Messbereich M kann der Schließpunkt S (0⁰ -Stellung) der Absperrklappe 2 exakt, sicher und reproduzierbar erfasst und kontrolliert werden. Durch die Erfassung des Drehwinkels der mit der Absperrklappe 2 drehfest verbundenen Antriebswelle 3a ist eine hohe Genauigkeit der Schließpunktmessung erzielbar ohne störende Einflüsse von Spiel zwischen Antrieb, Getriebe und Antriebswelle. Die erfindungsgemäße Schließpunktmessung ist auf einfache Weise nachrüstbar. Durch den Klemmring 43 und das Einstellmittel 48 ist eine Justage und Kalibrierung auf den Schließpunkt S möglich, wobei nach einer Vorkalibrierung im Herstellerwerk eine Endkalibrierung der Absperraramatur im eingebauten Zustand und unter Einsatzbedingungen über die Kontrollöffnung 50 ermöglicht wird.

## Patentansprüche

1. Absperrarmatur mit einem Gehäuse (1), einem in dem Gehäuse (1) angeordneten Ventilsitz (V) und einer den Ventilsitz (V) ansteuernden Absperrklappe (2), die im Gehäuse (1) mittels einer Antriebswelle (3a, 3b) drehbar gelagert ist, insbesondere mindestens doppelt-exzentrisch gelagert ist, wobei im Bereich des Ventilsitzes (V) eine Dichteinrichtung (D), insbesondere eine metallische Dichteinrichtung, ausgebildet ist, wobei zur Erfassung eines Schließpunktes (S) der Absperrarmatur eine Sensoreinrichtung (20) vorgesehen ist, wobei die Sensoreinrichtung (20) von einem Wegmesssensor (21) gebildet ist, der mittels eines an der Antriebswelle (3a) der Absperrarmatur angeordneten Betätigungsmittels (41) betätigbar ist, wobei mit dem Wegmesssensor (21) an der mit der Absperrklappe (2) drehfest verbundenen Antriebswelle (3a, 3b) eine Wegmessung durchgeführt wird.

2. Absperrarmatur nach Anspruch 1, **dadurch gekennzeichnet, dass** das Betätigungsmittel (41) derart an der Antriebswelle (3a) befestigt ist, dass eine Schließbewegung der Antriebswelle (3a) in einem Erfassungsbereich (E), insbesondere einem Erfassungsbereich (E) von 0° bis 5° , vor Erreichen des Schließpunktes (S) mittels des Wegmesssensors (21) erfassbar ist.

3. Absperrarmatur nach Anspruch 2, **dadurch gekennzeichnet, dass** der Wegmesssensor (21) eine verschiebbare Tastspitze (40) aufweist, die in dem Erfassungsbereich (E) mittels des Betätigungsmittels (41) betätigbar ist.

4. Absperrarmatur nach einem der Ansprüche 1 bis 3, **dadurch gekennzeichnet, dass** Wegmesssensor (21) als induktiver Wegtaster ausgebildet ist.

5. Absperrarmatur nach einem der Ansprüche 1 bis 4, **dadurch gekennzeichnet, dass** der Wegmesssensor (21) an einem Gehäuse (22), insbesondere einem die Antriebswelle (3a) umgebenden Gehäuse, der Absperrarmatur (1) befestigt ist.

6. Absperrarmatur nach einem der Ansprüche 1 bis 5, **dadurch gekennzeichnet, dass** das Betätigungsmittel (41) mittels eines Klemmringes (43) an der Antriebswelle (3a) befestigt ist.

7. Absperrarmatur nach Anspruch 6, **dadurch gekennzeichnet, dass** der Klemmring (43) mittels einer Verdrehsicherung (45) an der Antriebswelle (3a) befestigt ist.

8. Absperrarmatur nach einem der Ansprüche 1 bis 7, **dadurch gekennzeichnet, dass** das Betätigungsmittel (41) von einer an der Antriebswelle (3a) radial angeordneten Schaltfahne (42) gebildet ist.

9. Absperrarmatur nach Anspruch 8, **dadurch gekennzeichnet, dass** die Schaltfahne mittels eines Einstellmittels (48) an dem Klemmring (43) befestigt ist.

10. Absperrarmatur nach einem der Ansprüche 1 bis 9, **dadurch gekennzeichnet, dass** in dem Gehäuse (22) eine Kontrollöffnung (50) ausgebildet ist, die in dem Erfassungsbereich (E) einen Zugang zu dem Wegmesssensor (21) und dem Betätigungsmittel (41) und/oder dem Einstellmittel (48) ermöglicht.

11. Absperrarmatur nach einem der Ansprüche 1 bis 10, **dadurch gekennzeichnet, dass** der Wegmesssensor (21) tangential zu der Antriebswelle (3a) angeordnet ist.

12. Absperrarmatur nach einem der Ansprüche 1 bis 7, **dadurch gekennzeichnet, dass** das Betätigungsmittel (41) von einer an der Antriebswelle (3a) angeordneten Exzenternocke gebildet ist.

13. Absperrarmatur nach Anspruch 12, **dadurch gekennzeichnet, dass** der Wegmesssensor (21) radial an dem Gehäuse (22) angeordnet ist.

## Claims

1. Shut-off valve having a housing (1), a valve seat (V) arranged in the housing (1), and a shut-off damper (2) which actuates the valve seat (V) and is rotatably mounted in the housing (1) by means of a drive shaft (3a, 3b), in particular is mounted in at least a double-eccentric fashion, wherein a sealing device (D), in particular a metallic sealing device, is formed in the region of the valve seat (V), wherein a sensor device (20) is provided for detecting a closing point (S) of the shut-off valve, wherein the sensor device (20) is formed by a travel-measuring sensor (21) which can be activated by means of an activation means (41) arranged on the drive shaft (3a) of the shut-off valve, wherein a travel measurement is carried out with the travel-measuring sensor (21) on the drive shaft (3a, 3b) which is connected in a rotationally fixed fashion to the shut-off damper (2).

2. Shut-off valve according to Claim 1, **characterized in that** the activation means (41) is attached to the drive shaft (3a) in such a way that a closing movement of the drive shaft (3a) can be detected by means of the travel-measuring sensor (21), in a detection range (E), in particular a detection range (E) from 0° to 5°, before the closing point (S) is reached.

3. Shut-off valve according to Claim 2, **characterized in that** the travel-measuring sensor (21) has a displaceable sensing tip (40) which can be activated in the detection range (E) by means of the activation means (41).

4. Shut-off valve according to one of Claims 1 to 3, **characterized in that** the travel-measuring sensor (21) is embodied as an inductive travel sensor.

5. Shut-off valve according to one of Claims 1 to 4, **characterized in that** the travel-measuring sensor (21) is attached to a housing (22), in particular to a housing surrounding the drive shaft (3a), of the shut-off valve (1).

6. Shut-off valve according to one of Claims 1 to 5, **characterized in that** the activation means (41) is attached to the drive shaft (3a) by means of a clamping ring (43).

7. Shut-off valve according to Claim 6, **characterized in that** the clamping ring (43) is attached to the drive shaft (3a) by means of an anti-rotation means (45).

8. Shut-off valve according to one of Claims 1 to 7, **characterized in that** the activation means (41) is formed by a switching lug (42) which is arranged radially on the drive shaft (3a).

9. Shut-off valve according to Claim 8, **characterized in that** the switching lug is attached to the clamping ring (43) by means of an adjustment means (48).

10. Shut-off valve according to one of Claims 1 to 9, **characterized in that** a control opening (50), which permits access to the travel-measuring sensor (21) and the activation means (41) and/or the adjustment means (48) in the detection region (E), is formed in the housing (22).

11. Shut-off valve according to one of Claims 1 to 10, **characterized in that** the travel-measuring sensor (21) is arranged tangentially with respect to the drive shaft (3a).

12. Shut-off valve according to one of Claims 1 to 7, **characterized in that** the activation means (41) is formed by an eccentric cam which is arranged on the drive shaft (3a).

13. Shut-off valve according to Claim 12, **characterized in that** the travel-measuring sensor (21) is arranged radially on the housing (22).

## Revendications

1. Soupape d'arrêt dotée d'un carter (1), d'un siège de soupape (V) disposé dans le carter (1) et d'un clapet d'arrêt (2) commandant le siège de soupape (V) et disposé de façon à pouvoir tourner dans le carter (1) au moyen d'un arbre d'entraînement (3a, 3b), notamment disposé de façon au moins doublement excentrée, un dispositif d'étanchéité (D), notamment un dispositif d'étanchéité métallique, étant réalisé dans la région du siège de soupape (V), un dispositif de détection (20) étant prévu pour détecter un point de fermeture (S) de la soupape d'arrêt, le dispositif de détection (20) étant formé d'un capteur de mesure de course (21) pouvant être actionné à l'aide d'un moyen d'actionnement (41) disposé au niveau de l'arbre d'entraînement (3a) de la soupape d'arrêt, une mesure de course étant réalisée à l'aide du capteur de mesure de course (21) au niveau de l'arbre d'entraînement (3a, 3b) relié solidairement en rotation au clapet d'arrêt (2) .

2. Soupape d'arrêt selon la revendication 1, **caractérisée en ce que** le moyen d'actionnement (41) est fixé de telle sorte à l'arbre d'entraînement (3a) qu'un mouvement de fermeture de l'arbre d'entraînement (3a) peut être détecté dans une zone de détection (E), notamment une zone de détection (E) allant de 0° à 5° avant que le point de fermeture (S) ne soit atteint, à l'aide du capteur de mesure de course (21).

3. Soupape d'arrêt selon la revendication 2, **caractérisée en ce que** le capteur de mesure de course (21) comporte une pointe de palpation (40) mobile pouvant être actionnée dans la zone de détection (E) à l'aide du moyen d'actionnement (41).

4. Soupape d'arrêt selon l'une quelconque des revendications 1 à 3, **caractérisée en ce que** le capteur de mesure de course (21) prend la forme d'un palpeur inductif.

5. Soupape d'arrêt selon l'une quelconque des revendications 1 à 4, **caractérisée en ce que** le capteur de mesure de course (21) est fixé à un carter (22), notamment à un carter de la soupape d'arrêt (1) entourant l'arbre d'entraînement (3a).

6. Soupape d'arrêt selon l'une quelconque des revendications 1 à 5, **caractérisée en ce que** le moyen d'actionnement (41) est fixé à l'arbre d'entraînement (3a) à l'aide d'une bague de serrage (43).

7. Soupape d'arrêt selon la revendication 6, **caractérisée en ce que** la bague de serrage (43) est fixée à l'arbre d'entraînement (3a) au moyen d'une fixation antitorsion (45).

8. Soupape d'arrêt selon l'une quelconque des revendications 1 à 7, **caractérisée en ce que** le moyen d'actionnement (41) est formé d'une languette de commutation (42) disposée dans le plan radial au niveau de l'arbre d'entraînement (3a).

9. Soupape d'arrêt selon la revendication 8, **caractérisée en ce que** la languette de commutation est fixée à la bague de serrage (43) à l'aide d'un moyen de réglage (48).

10. Soupape d'arrêt selon l'une quelconque des revendications 1 à 9, **caractérisée en ce qu'**une ouverture de contrôle (50) est réalisée dans le carter (22), ladite ouverture permettant d'accéder au capteur de mesure de course (21) et au moyen d'actionnement (41) et/ou au moyen de réglage (48) dans la zone de détection (E).

11. Soupape d'arrêt selon l'une quelconque des revendications 1 à 10, **caractérisée en ce que** le capteur de mesure de course (21) est disposé tangentiellement par rapport à l'arbre d'entraînement (3a).

12. Soupape d'arrêt selon l'une quelconque des revendications 1 à 7, **caractérisée en ce que** le moyen d'actionnement (41) est formé d'une came excentrée disposée au niveau de l'arbre d'entraînement (3a).

13. Soupape d'arrêt selon la revendication 12, **caractérisée en ce que** le capteur de mesure de course (21) est disposé dans le plan radial au niveau du carter (22).
